# EUROPEAN PATENT SPECIFICATION

(11) **EP 2 767 057 B1**
(45) Date of publication and mention of the grant of the patent: **02.09.2020**
(21) Application number: 12727506.3
(22) Date of filing: 01.06.2012
(51) Int. Cl.: H04L 29/06, G05B 19/418

(54) **PROCESS INSTALLATION NETWORK INTRUSION DETECTION AND PREVENTION**
VERFAHREN ZUR ERKENNUNG UND VERHINDERUNG DES EINDRINGENS IN EIN PROZESSANLAGENNETZWERK
DÉTECTION ET PRÉVENTION D'INTRUSION DANS UN RÉSEAU D'INSTALLATION DE PROCESSUS

(30) Priority: 13.10.2011 US 201113272394
(43) Date of publication of application: 20.08.2014
(73) Proprietor: Rosemount Inc., Chanhassen, MN 55317 (US)
(72) Inventor: ROTVOLD, Eric, D., West Saint Paul, MN 55118 (US); POTTER, Jeff, D., Shorewood, MN 55331 (US)
(74) Representative: Isarpatent
(86) International application number: PCT/US2012/040413
(87) International publication number: WO 2013/055408

(56) References cited:
- EP-A2- 2 068 215
- US-A1- 2011 072 506
- AGUINALDO B BATISTA ET AL: "Application Filters for TCP/IP Industrial Automation Protocols", 30 September 2009 (2009-09-30), CRITICAL INFORMATION INFRASTRUCTURES SECURITY, SPRINGER BERLIN HEIDELBERG, BERLIN, HEIDELBERG, PAGE(S) 111 - 123, XP019146855, ISBN: 978-3-642-14378-6 section 1 section 2 section 3.2 section 4 section 5.4 section 6 section 8
- TANYA ROOSTA ET AL: "An intrusion detection system for wireless process control systems", MOBILE AD HOC AND SENSOR SYSTEMS, 2008. MASS 2008. 5TH IEEE INTERNATIONAL CONFERENCE ON, IEEE, PISCATAWAY, NJ, USA, 29 September 2008 (2008-09-29), pages 866-872, XP031354873, ISBN: 978-1-4244-2574-7

## Description

### BACKGROUND

Modern process installations are used to provide and/or produce a variety of products and materials used every day. Examples of such process installations include petroleum refining installations, pharmaceutical production installations, chemical processing installations, pulp and other processing installations. In such installations, a process control and measurement network may include thousands or even of tens of thousands of various field devices communicating with a control room, and sometimes with one another, to control the process. Given that malfunctions in a given field device could cause the process to go out of control, the physical characteristics, and electrical communication of field devices is generally subject to stringent specifications.

Traditionally, field devices in a given process installation have generally been able to communicate over a process control loop or segment with a control room and/or other field devices via wired connections. An example of a wired process communication protocol is known as the Highway Addressable Remote Transducer (HART®) protocol. HART® communication is one of the primary communication protocols used in the process industries. Recently, it has become possible, and potentially desirable in some cases, to permit process installations access to the Internet. While such a feature provides the ability to interact with the process installation from virtually any connected computer around the globe, it also provides the potential for a malicious entity, such as a hacker, to attempt to influence the process installation without travelling to the physical location of the process installation.

Another recent development with respect to process installations is utilization of wireless communication. Such wireless communication simplifies process installations in that it is no longer required to provide long runs of wires to the various field devices. Moreover, one such wireless protocol, WirelessHART (IEC 62591), expands upon the traditional HART® protocol and provides vastly increased data transfer rates. For example, WirelessHART supports communication up to 250 Kbps. Relevant portions of the Wireless HART® Specification include: HCF_Spec 13, revision 7.0; HART Specification 65 - Wireless Physical Layer Specification; HART Specification 75 - TDMA Data Link Layer Specification (TDMA refers to Time Division Multiple Access); HART Specification 85 - Network Management Specification; HART Specification 155 - Wireless Command Specification; and HART Specification 290 - Wireless Devices Specification. While wireless communication provides a number of advantages for process installations, it also allows for devices in the physical proximity of the process installation to potentially engage and affect the wireless communication network.

Given the recent connectivity of process installations, it is now vitally important that process communication be protected from intrusion and activities of malicious entities. This applies for process installations that may be connected to the Internet, process installations that employ wireless process communication, or both. Accordingly, providing a process installation with the ability to detect and prevent intrusion upon a process communication loop would further help secure the various process installations that rely upon process communication.

EP 2 068 215 discloses an apparatus and methods for intrusion protection in safety instrumented process control systems. An example method of protecting a safety instrumented system includes receiving legitimate information from a component of a process control system wherein the legitimate information is intended for delivery to a safety instrumented system, determining if a signature at least substantially matches the legitimate information, and preventing the legitimate information from reaching the safety instrumented system when it is determined that the signature at least substantially matches the legitimate information.
US 2011/072 506 discloses a Unified Threat Management System (UTMS) for securing network traffic in a process control system that may comprise network devices configured to receive network traffic related to the process control system and including a ruleset received from an external source. The ruleset may include one or more rules defining a condition to accept or deny the network traffic received at the network device. The state of the network device may be integrated into the process control system as a process control object or variable, thus allowing the state and other UTMS and component network device parameters and variables to be displayed to an operator at a workstation within a graphical process control system environment. The network devices may also communicate with a perpetual service that proactively supplies the devices with rulesets to meet the latest security threats, threat patterns, and control system vulnerabilities found or predicted to exist within the network.
Aguinaldo B Batista et al. "Application Filters for TCP/IP Industrial Automation Protocols" discloses a filtering system for TCP/IP-based automation networks in which only certain kind of industrial traffic is permitted. All network traffic which does not conform with a proper industrial protocol pattern or with specific rules for its actions is supposed to be abnormal and must be blocked. As a case study, the authors developed a seventh layer firewall application with the ability of blocking spurious traffic, using an IP packet queueing engine and a regular expression library.

### SUMMARY

The present invention provides a process communication device according to claim 1 and a method of providing communication protection according to claim 7. A process communication device includes a process communication interface for communicating on a process communication loop in accordance with a process communication protocol. A controller is coupled to the process communication interface. A rules store is coupled to the controller, and has at least one process communication packet rule that is based on the process communication protocol. The controller applies the at least one process communication packet rule to at least one process communication packet received from the process communication interface, and generates event information when a process communication packet fails at least one process communication packet rule.

### BRIEF DESCRIPTION OF THE DRAWINGS

FIG. 1 is a diagrammatic view of a process communication system in accordance with an embodiment of the present invention.
FIG. 2 is a diagrammatic view of a process communication and control system within which embodiments of the present invention are particularly applicable.
FIG. 3 is a diagrammatic view of another process communication and control environment with which embodiments of the present invention are particularly useful.
FIG. 4 is a diagrammatic view of a process communication security appliance in accordance with an embodiment of the present invention.
FIG. 5 is a flow diagram of a method of providing intrusion detection and prevention in a process installation in accordance with an embodiment of the present invention.
FIG. 6 is a flow diagram of a method of providing intrusion detection and prevention in a process installation in accordance with another embodiment of the present invention.

### DETAILED DESCRIPTION OF ILLUSTRATIVE EMBODIMENTS

Embodiments of the present invention generally leverage specific knowledge of the HART® protocol (both wired and wireless) and/or HART® Device Descriptions (DD's) to monitor process communication network traffic coming into the process communication loop, leaving the process communication loop, or even transiting the process communication loop for anomalies. While embodiments of the present invention are generally described with respect to HART® process communication loops, embodiments of the present invention can be practiced with any suitable process communication protocols that support device descriptions.

The HART® protocol has a hybrid physical layer consisting of digital communication signals superimposed on a standard 4-20 mA analog signal. The data transmission rate is approximately 1.2 Kbps/sec. HART® communication is one of the primary communication protocols in process industries. Both wireless and wired HART® communications share a substantially similar application layer. Moreover, the command content of both wireless and wired HART® communications is identical. Accordingly, while the physical layers may vary, at the application layer, these two process communication protocols are very similar.

Process communication network security on and over HART® networks is important, and becoming more so as HART® network traffic can now be transported over TCP/IP networks as well as wireless networks. Some network security has been provided by devices such as those sold under the trade designation Model 1420 Wireless Gateway from Emerson Process Management, of Chanhassen, Minnesota. This device provides the ability to authenticate sender and receiver, verify that the data is valid, encrypt process communication data, and manage periodic changes to encryption keys automatically. While the process communication security provided by the Model 1420 is invaluable to modern process communication networks, embodiments of the present invention generally build upon the security provided by the 1420 Wireless Gateway by leveraging additional knowledge about the HART® protocol itself, HART® device descriptions (DD's) or a combination thereof. While embodiments of the present invention are applicable to any device that has access to the process communication, it is preferred that embodiments of the present invention be embodied in either a firewall appliance, a gateway, such as an improved wireless gateway, or an access point type of device.

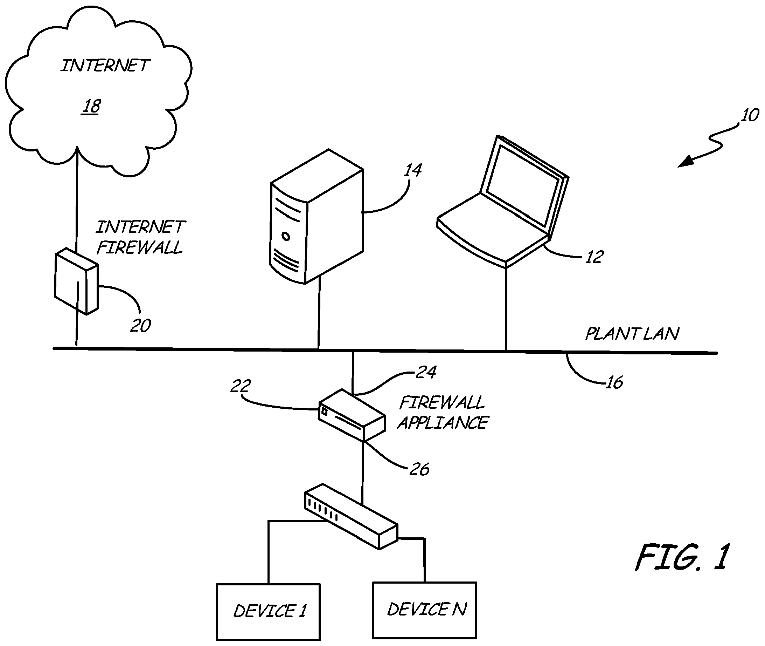

FIG. 1 is a diagrammatic view of a process communication system 10 in accordance with an embodiment of the present invention. System 10 includes a workstation 12 and server 14 communicatively coupled to one another over plant local area network 16. Network 16 is coupled to Internet 18 via local area network firewall 20. Local area network firewall 20 is a well-known device providing only selected TCP/IP traffic therethrough. In the embodiment illustrated in FIG. 1, a process communication security appliance 22 is coupled to plant LAN 16 by virtue of connection 24, and is further coupled to devices 1-n via port 26. Process communication security appliance 22 protects the process communication segments/loops from malicious activity originating over Internet 18 and/or Plant LAN 16. A processor within process communication security appliance 22 executes software instructions that are able to receive one or more process communication packets and test whether the packet(s) satisfies one or more rules that are based specifically upon HART® process communication rules, device description requirements, or a combination thereof.

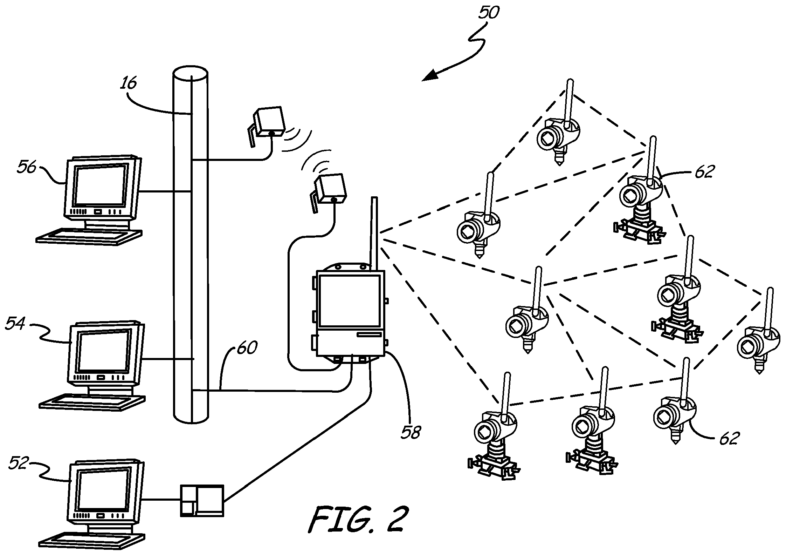

FIG. 2 is a diagrammatic view of a process communication and control system 50 within which embodiments of the present invention are particularly applicable. A number of workstations 52, 54, and 56 are coupled together via plant LAN 16. Additionally, a wireless process communication gateway 58 is also coupled to LAN 16 via connection 60. The arrangement shown in FIG. 2 is the current environment within which the Model 1420 Smart Wireless Gateway operates. Gateway 58 communicates with one or more field devices 62 via WirelessHART® communication. Accordingly, embodiments of the present invention may be practiced using the processor, or other suitable controller, disposed within gateway 58.

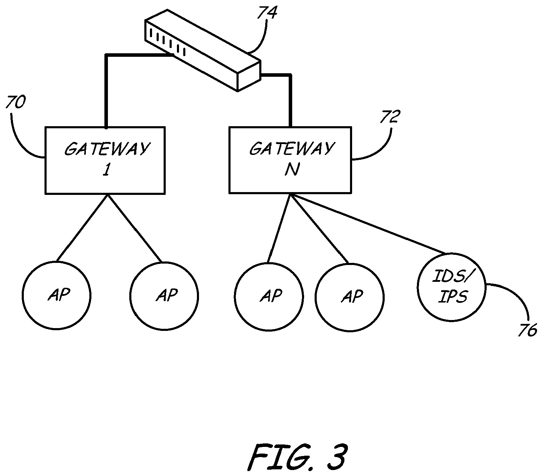

FIG. 3 is a diagrammatic view of another process communication and control environment with which embodiments of the present invention are particularly useful. Specifically, one or more gateways (1-n) 70, 72 are communicatively coupled via device 74. Each gateway can communicate with one or more access points. In accordance with an embodiment of the present invention, one of the access points 76 is configured, through hardware, software, or a combination thereof, to receive process communication packets and inspect the process communication packets to determine if the communication complies with one or more rules that are based on the HART® protocol, Device Descriptions, or a combination thereof. Access point 76 listens to data in the wireless network and inspects packets as they arrive. As a result of inspections, certain aspects of communication traffic can be tracked (source address, arrival rate, known device, new device, join requests, et cetera) and statistics and/or alerts can be provided to the gateway upon detection of events. Embodiments of the present invention also include the utilization of a plurality of gateways and respective access points to provide a redundant pair.

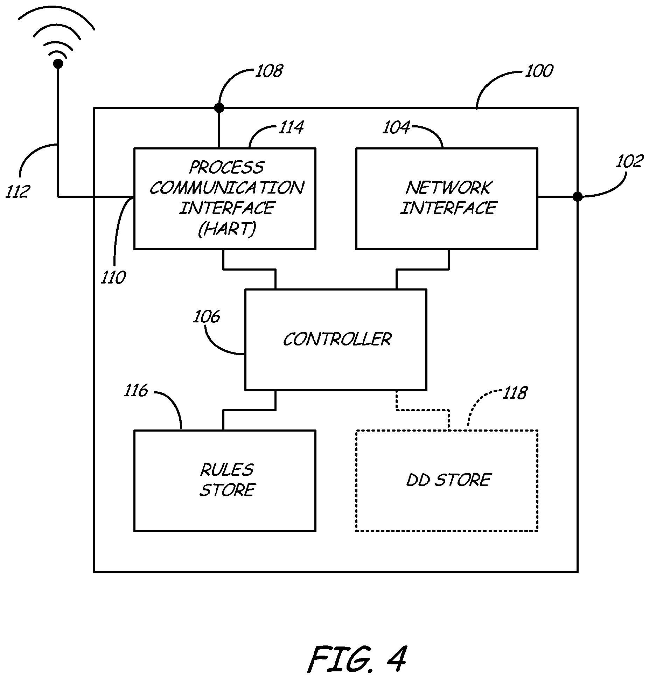

FIG. 4 is a diagrammatic view of a process communication security appliance in accordance with an embodiment of the present invention. Security appliance 100 includes a network interface 102 coupleable to a data communication network, such as an Ethernet-based data communication network. Port 102 is coupled to network interface physical layer 104 to generate and receive data communication packets in accordance with known techniques. Network interface physical layer 104 is coupled to controller 106 which is preferably a microprocessor that includes, or is coupled to, suitable memory, such as random access memory, read-only memory, flash memory, et cetera, to store and execute program instructions. Security appliance 100 also preferably includes a wired process communication port 108 and/or a wireless process communication port 110 coupled to antenna 112. In embodiments where security appliance 100 is embodied within a wireless access point, no wired process communication port is required. Each of ports 108, 110 may be coupled to a HART® process communication interface 114. Interface 114 enables controller 106 to communicate with external devices, such as field devices, using the known HART® protocol. In some embodiments, HART® communication may be provided over an IP network, thus network interface physical layer 104 may also be a source of HART® packets.

In accordance with an embodiment of the present invention, security appliance 100 includes rules store 116. Optionally, security appliance 100 may include device description store 118. Rules store 116 includes non-volatile memory that stores one or more rules that may be enforced upon HART® process communication based upon an underlying understanding of the HART® protocol. Rules store 116 enables controller 106 to determine if the construction and/or content of packets in the HART® network are valid. Further, the validity of the source and destination of the packets can be determined. Finally, the content of the packet itself can be analyzed to determine if it is proper. For example, a malformed packet may have a bad cyclic redundancy check, byte count, pay load size, et cetera. If the packet is invalid, security appliance 100 would not forward the packet to the requested destination. Additionally, and/or alternatively, security appliance 100 can store event data related to the detection of the malformed packet, and/or send an appropriate communication to a responsible party. Moreover, controller 106 may track and/or analyze the event data such that if a number of malformed packets are detected from a single source within a specific period of time, controller 106 may determine that an attack is currently active. If so, controller 106 may notify the user and/or a responsible party that the attack may be occurring, along with details of the suspected source of the attack. Further still, controller 106 can act to reject all packets from that source until the user intervenes.

As illustrated in FIG. 4, security appliance 100 may also include a device description store 118. With the current state of the art of memory technology, it is economically feasible for store 118 to be large enough to contain device descriptions of all known field devices that communicate in accordance with the HART® protocol as of the date of manufacture for security appliance 100. Moreover, as new HART®-communicating devices are produced, device description store 118 may be updated dynamically by virtue of data network communication port 102. Maintaining a comprehensive device description store 118 allows for additional checks and/or tests to be performed upon the process communication packets. For example, if a given process communication packet is from a field device that, according to its device description, is only known to provide a temperature measurement, a packet indicative of a process pressure from such field device would be deemed malicious even if the packet otherwise complied with all rules set forth in rules store 116.

There are a number of different types of commands that are used in the HART® protocol. These types of commands include universal commands, common practice commands, wireless commands, device family commands, and device-specific commands. With the exception of the device-specific commands, at least some knowledge of commands in each type can be known based upon the HART® specification itself. Moreover, even device-specific commands can be scrutinized if the process communication security appliance contains a device description relative to a particular specific field device.

One example of a rule that can be enforced at the application-layer of a HART® protocol packet is as follows. Since, for a given HART® revision, the byte count relative to each and every command is known, if a packet is indicative of a command, the known byte count can be enforced for the packet. Even for device-specific commands, some rules can be provided. Specifically, the command range can be tested to determine if it is within an allowable range (such as 128-240 and 64768 - 65021). Further, the total byte count of the packet can be determined and compared with the contents of the byte count field to check for valid agreement.

One of the synergies of embodying the functionality of the process communication security appliance within a gateway, such as the Model 1420, is that the gateway is aware of all individual field devices on the network. Moreover, the gateway has the additional advantage in that it has access to all the information required (specifically decryption keys) to decrypt and inspect all HART® packets. Additionally, the security appliance, preferably embodied within a gateway, can build a database or list of known destination/wireless devices and ensure that only messages for those devices are sent/forwarded. Further still, the security appliance can check and/or allow forwarding of packets only from known/configured sources. Finally, as set forth above, the packet construction itself can be inspected to determine if the header content is proper, if the byte count corresponds with the actual size of the packet, if the CRC checksum is valid, and if the destination address is valid. In addition to these security measures, the processor of the controller of the security appliance can react to dynamic communication changes. Specifically, known neural network and/or artificial intelligence algorithms can be employed to allow controller 106 to essentially learn normal process communication network traffic. Additionally, or alternatively, a set of statistics relative to the network communication and/or various destinations and sources can be maintained. If changes are detected relative to the learned normal communication and/or statistically stored parameters, an alert can be transmitted to a responsible party by virtue of either data communication network port 102 or a process communication port 108, 110. Additionally, suspicious patterns of communication can be specifically identified based upon rules. For example, if controller 106 observes a number of destination address requests, where the device ID is simply incremented or decremented with each request, the pattern would appear to be an application searching for a device. Such searching could be considered to be malicious. Further, device address requests that repeatedly increment or decrement an expanded device type may also signify an application searching for a hit. This would also be considered to be a malicious indicator. Further still, destination address requests that include simply incrementing or decrementing message fields, such as command, byte count, data fields, may indicate an application that is attempting to find an available device, and/or disrupt the process communication network. Detection of such a pattern could be considered a malicious indicator.

In the event that a malicious indicator is discovered, it is preferably logged locally in the security appliance. Additionally, the security appliance can include a simple network management protocol or syslog option to report the event and/or additional status information to a responsible party or information technology application. Syslog is a well known logging mechanism used by server type applications to log events/alerts to an external server or database for further analysis.

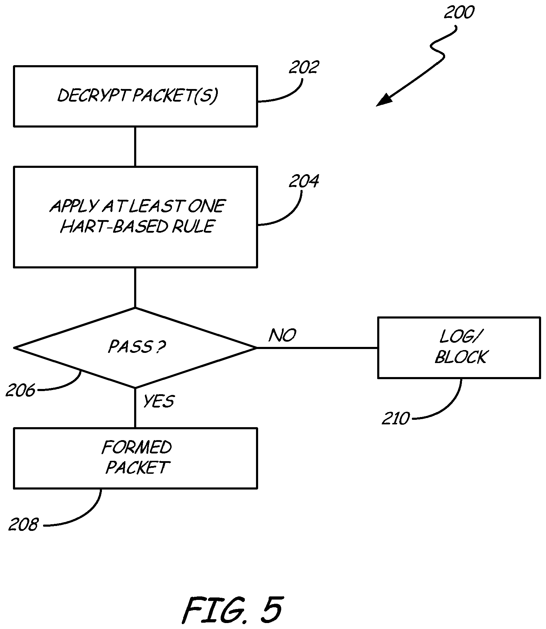

FIG. 5 is a flow diagram of a method of providing intrusion detection and prevention in a process installation in accordance with an embodiment of the present invention. Method 200 begins at block 202 where a security appliance or process communication gateway receives at least one process communication packet and decrypts the packet. At block 204, method 200 applies at least one rule against the decrypted packet, where the rule is based on a priori knowledge of the HART protocol. As set forth above, one exemplary rule is that for a given HART command, the byte count of the packet must match that set forth in the HART specification. At step 206, method 200 determines whether the decrypted packet passed all of the rules applied in block 204. If all rules were successfully passed, then control passes to block 208 where the packet is forwarded to its intended recipient. If however, the packet failed at least one rule, then control passes to block 210, where the security event is preferably logged or en event generated, and the packet is blocked from further communication to the intended recipient.

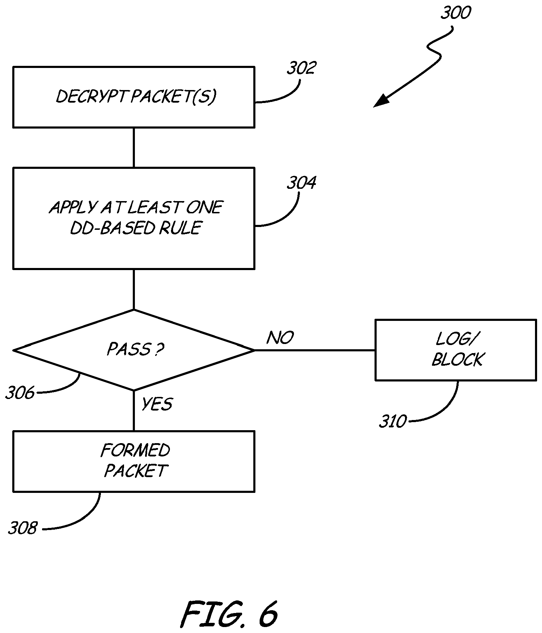

FIG. 6 is a flow diagram of a method of providing intrusion detection and prevention in a process installation in accordance with an embodiment of the present invention. Method 300 begins at block 302 where a security appliance or process communication gateway receives at least one process communication packet and decrypts the packet, as required. At block 304, method 300 applies at least one rule against the decrypted packet, where the rule is based on a process communication protocol (such as HART or FOUNDATION Fieldbus) device description (DD). As set forth above, one exemplary rule that is based on a device description would be a process variable temperature transmitter providing a process fluid pressure value. At step 306, method 300 determines whether the decrypted packet passed all of the rules applied in block 304. If all rules were successfully passed, then control passes to block 308 where the packet is forwarded to its intended recipient. If however, the packet failed at least one rule, then control passes to block 310, where the security event is preferably logged, and the packet is blocked from further communication to the intended recipient.

Methods 200 and 300 are not mutually exclusive. Instead, the positive result of one method can be provided as the input to the other method to provide process installation intrusion detection and prevention based on both detailed knowledge of the process communication packets and device descriptions.

## Claims

1. A process communication device (100), comprising:
a process communication interface (114) for communicating with at least one field device on a process communication loop in accordance with a process communication protocol;
a controller (106) coupled to the process communication interface (114);
a rules store (116) coupled to the controller (106), the rules store (116) having at least one process communication packet rule that is based on the process communication protocol;
a device description store (118) coupled to the controller (106), the device description store (118) having at least one device description that describes the at least one field device;
wherein the controller (106) applies the at least one process communication packet rule and the at least one device description based rule to the at least one process communication packet received from the process communication interface (114), and generates event information when a process communication packet fails the at least one process communication packet rule or the at least one device description based rule,
wherein the controller (106) is configured to decrypt the at least one process communication packet before applying the at least one process communication packet rule, and
wherein the process communication device (100) is embodied within a process communication gateway (58).

2. The process communication device of claim 1, wherein the process communication protocol is the HART protocol.

3. The process communication device of claim 1, wherein the process communication interface (114) is a wireless process communication interface.

4. The process communication device of claim 1, and further comprising a network interface (102, 104) coupled to the controller (106), and wherein the controller (106) is configured to forward the process communication packet through the network interface (102, 104) if the process communication packet passes all process communication packet rules.

5. The process communication device of claim 1, wherein at least one process communication packet rule relates an allowable number of packet bytes to a process communication protocol command contained in the packet or wherein the at least one process communication packet rule includes an allowable command range.

6. The process communication device of claim 1, wherein the allowable command range is 128 to 240 and 64768 - 65021.

7. A method of providing process communication protection, the method comprising the following steps performed by a process communication device (100) embodied within a process communication gateway (58):
obtaining at least one process communication packet in accordance with a process communication protocol from at least one field device;
applying at least one rule against the process communication packet, wherein the at least one rule is based on the process communication protocol;
applying at least a second rule against the process communication packet, wherein the at least a second rule is based upon a device description for the field device; and determining an event based on whether the at least one process communication packet passed each of the at least one rule and at least a second rule,
wherein a controller (106) comprised in a process communication device (100) decrypts the at least one process communication packet before applying the at least one process communication packet rule.

## Patentansprüche

1. Prozesskommunikationsgerät (100), umfassend:
eine Prozesskommunikationsschnittstelle (114) zum Kommunizieren mit mindestens einem Feldgerät auf einer Prozesskommunikationsschleife gemäß einem Prozesskommunikationsprotokoll;
eine Steuerung (106), die mit der Prozesskommunikationsschnittstelle (114) gekoppelt ist;
einen Regelspeicher (116), der mit der Steuerung (106) gekoppelt ist, wobei der Regelspeicher (116) mindestens eine Prozesskommunikationspaketregel aufweist, die auf dem Prozesskommunikationsprotokoll basiert;
einen Gerätebeschreibungsspeicher (118), der mit der Steuerung (106) gekoppelt ist, wobei der Gerätebeschreibungsspeicher (118) mindestens eine Gerätebeschreibung aufweist, die das mindestens eine Feldgerät beschreibt;
wobei die Steuerung (106) die mindestens eine Prozesskommunikationspaketregel und die mindestens eine auf einer Gerätebeschreibung basierende Regel auf das mindestens eine Prozesskommunikationspaket anwendet, das von der Prozesskommunikationsschnittstelle (114) empfangen wird, und
Ereignisinformationen erzeugt, wenn ein Prozesskommunikationspaket die mindestens eine Prozesskommunikationspaketregel oder die mindestens eine auf einer Gerätebeschreibung basierende Regel nicht erfüllt,
wobei die Steuerung (106) eingerichtet ist, um das mindestens eine Prozesskommunikationspaket zu entschlüsseln, bevor sie die mindestens eine Prozesskommunikationspaketregel anwendet, und
wobei das Prozesskommunikationsgerät (100) innerhalb eines Prozesskommunikationsgateways (58) ausgeführt ist.

2. Prozesskommunikationsgerät nach Anspruch 1, wobei das Prozesskommunikationsprotokoll das HART-Protokoll ist.

3. Prozesskommunikationsgerät nach Anspruch 1, wobei die Prozesskommunikationsschnittstelle (114) eine Drahtlosprozesskommunikationsschnittstelle ist.

4. Prozesskommunikationsgerät nach Anspruch 1
und ferner umfassend eine Netzwerkschnittstelle (102, 104), die mit der Steuerung (106) gekoppelt ist, und
wobei die Steuerung (106) eingerichtet ist, um das Prozesskommunikationspaket durch die Netzwerkschnittstelle (102, 104) weiterzuleiten, wenn das Prozesskommunikationspaket alle Prozesskommunikationspaketregeln erfüllt.

5. Prozesskommunikationsgerät nach Anspruch 1, wobei mindestens eine Prozesskommunikationspaketregel eine zulässige Anzahl von Paketbytes mit einem in dem Paket enthaltenen Prozesskommunikationsprotokollbefehl in Beziehung setzt oder wobei die mindestens eine Prozesskommunikationspaketregel einen zulässigen Befehlsbereich aufweist.

6. Prozesskommunikationsgerät nach Anspruch 1, wobei der zulässige Befehlsbereich 128 bis 240 und 64768-65021 ist.

7. Verfahren zum Bereitstellen eines Prozesskommunikationsschutzes, wobei das Verfahren die folgenden Schritte umfasst, die durch ein Prozesskommunikationsgerät (100), das innerhalb eines Prozesskommunikationsgateways (58) ausgeführt ist, durchgeführt werden:
Erhalten mindestens eines Prozesskommunikationspakets gemäß einem Prozess-Kommunikationsprotokoll von mindestens einem Feldgerät;
Anwenden mindestens einer Regel auf das Prozesskommunikationspaket, wobei die mindestens eine Regel auf dem Prozesskommunikationsprotokoll basiert;
Anwenden mindestens einer zweiten Regel auf das Prozesskommunikationspaket, wobei die mindestens eine zweite Regel auf einer Gerätebeschreibung für das Feldgerät basiert; und
Bestimmen eines Ereignisses darauf basierend, ob das mindestens eine Prozesskommunikationspaket jede von der mindestens einen Regel und mindestens einen zweiten Regel erfüllt hat,
wobei eine in einem Prozesskommunikationsgerät (100) enthaltene Steuerung (106) das mindestens eine Prozesskommunikationspaket entschlüsselt, bevor sie die mindestens eine Prozesskommunikationspaketregel anwendet.

## Revendications

1. Dispositif de communication de processus (100), comprenant :
une interface de communication de processus (114) pour communiquer avec au moins un dispositif de terrain sur une boucle de communication de processus conformément à un protocole de communication de processus;
un contrôleur (106) couplé à l'interface de communication de processus (114);
un magasin de règles (116) couplé au contrôleur (106), le magasin de règles (116) comportant au moins une règle de paquets de communication de processus qui est basée sur le protocole de communication de processus;
un magasin de descriptions de dispositifs (118) couplé au contrôleur (106), le magasin de descriptions de dispositifs (118) ayant au moins une description de dispositif qui décrit le au moins un dispositif de terrain;
dans lequel le contrôleur (106) applique la au moins une règle de paquets de communication de processus et la au moins une règle basée sur la description de dispositif au au moins un paquet de communication de processus reçu à partir de l'interface de communication de processus (114), et
génère des informations d'événement lorsqu'un paquet de communication de processus ne satisfait pas à la au moins une règle de paquets de communication de processus ou à la au moins une règle basée sur la description de dispositif,
dans lequel le contrôleur (106) est configuré pour déchiffrer le au moins un paquet de communication de processus avant d'appliquer la au moins une règle de paquets de communication de processus, et
dans lequel le dispositif de communication de processus (100) est mis en œuvre au sein d'une passerelle de communication de processus (58).

2. Dispositif de communication de processus selon la revendication 1, dans lequel le protocole de communication de processus est le protocole HART.

3. Dispositif de communication de processus selon la revendication 1, dans lequel l'interface de communication de processus (114) est une interface de communication de processus sans fil.

4. Dispositif de communication selon la revendication 1, et comprenant en outre une interface de réseau (102, 104) couplée au contrôleur (106), et dans lequel le contrôleur (106) est configuré pour transmettre le paquet de communication de processus via l'interface de réseau (102, 104) si le paquet de communication de processus satisfait à toutes les règles de paquets de communication de processus.

5. Dispositif de communication selon la revendication 1, dans lequel au moins une règle de paquets de communication de processus concerne un nombre admissible d'octets de paquet pour une commande de protocole de communication de processus contenue dans le paquet ou dans lequel la au moins une règle de paquet de communication de processus comprend une plage de commande admissible.

6. Dispositif de communication de processus selon la revendication 1, dans lequel la plage de commande admissible est de 128 à 240 et de 64768 à 65021.

7. Procédé de fourniture d'une protection de communication de processus, le procédé comprenant les étapes suivantes exécutées par un dispositif de communication de processus (100) mis en œuvre dans une passerelle de communication de processus (58) :
obtenir au moins un paquet de communication de processus conformément à un protocole de communication de processus à partir d'au moins un dispositif de terrain;
appliquer au moins une règle au paquet de communication de processus, dans lequel la au moins une règle est basée sur le protocole de communication de processus;
appliquer au moins une seconde règle au paquet de communication de processus, dans lequel la au moins une seconde règle est basée sur une description de dispositif pour le dispositif de terrain; et
déterminer un événement sur la base du fait de savoir si le au moins un paquet de communication de processus satisfait à chacune de la au moins une règle et de la au moins une seconde règle,
dans lequel un contrôleur (106) compris dans un dispositif de communication de processus (100) déchiffre le au moins un paquet de communication de processus avant d'appliquer la au moins une règle de paquet de communication de processus.
